(19) Europäisches Patentamt
European Patent Office
Office européen des brevets

(11) Veröffentlichungsnummer: **0 013 919**
**B1**

(12) # EUROPÄISCHE PATENTSCHRIFT

(45) Veröffentlichungstag der Patentschrift: **01.06.83**

(51) Int. Cl.³: **C 09 B 67/26**, D 06 P 3/62, D 06 P 1/02

(21) Anmeldenummer: **80100147.0**

(22) Anmeldetag: **12.01.80**

(54) **Wässrige Farbstoffzubereitung und Verfahren zu ihrer Herstellung und ihre Verwendung zum Färben und Bedrucken.**

(30) Priorität: **19.01.79 DE 2902034**

(43) Veröffentlichungstag der Anmeldung:
**06.08.80 Patentblatt 80/16**

(45) Bekanntmachung des Hinweises auf die Patenterteilung:
**01.06.83 Patentblatt 83/22**

(84) Benannte Vertragsstaaten:
**BE CH DE FR GB IT NL**

(56) Entgegenhaltungen:
**DE - B - 1 619 470**
**DE - C - 104 102**
**FR - A - 882 563**
**FR - A - 2 079 342**
**FR - A - 2 124 463**
**US - A - 2 489 463**
**US - A - 3 551 088**
**US - A - 3 957 425**
**US - A - 4 118 182**

(73) Patentinhaber: **CASSELLA Aktiengesellschaft**
**Hanauer Landstrasse 526**
**D-6000 Frankfurt am Main 61 (DE)**

(72) Erfinder: **Bauer, Wolfgang, Dr.**
**Masurenstrasse 6**
**D-6457 Maintal 3 (DE)**
Erfinder: **Dickmanns, Heinz**
**Lauterbacher Strasse 8**
**D-6000 Frankfurt am Main 61 (DE)**
Erfinder: **Morgenroth, Konstantin, Dr.**
**Büchertalstrasse 4**
**D-6457 Maintal 4 (DE)**
Erfinder: **Reh, Kuno, Dr.**
**Lauterbacher Strasse 14**
**D-6000 Frankfurt am Main 61 (DE)**
Erfinder: **Ribka, Joachim, Dr.**
**Rügener Strasse 4**
**D-6050 Offenbach-Bürgel (DE)**

(74) Vertreter: **Urbach, Hans-Georg, Dr.**
**Hanauer Landstrasse 526**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Courier Press, Leamington Spa, England.

# Wäßrige Farbstoffzubereitung und Verfahren zu ihrer Herstellung und ihre Verwendung zum Färben und Bedrucken

Substantive Farbstoffe oder Direktfarbstoffe aus der Reihe der Tris- und Tetrakisazofarbstoffe werden zum Färben und Bedrucken von hydroxylgruppenhaltigen natürlichen oder synthetischen Fasermaterialien, wie z.B. Baumwolle, Regeneratcellulose oder Papier verwendet.

Für die kontinuierliche Färbeweise müssen in der Färberei große Farbstoffmengen zubereitet werden. Es besteht daher eine lebhafte Nachfrage nach flüssigen Farbstoffzubereitungen. Diese Nachfrage konnte bisher nicht — oder nur in Einzelfällen — wegen der geringen Wasserlöslichkeit substantiver Tris- und Tetrakisazofarbstoffe befriedigt werden.

Aus der US—Patentschrift 4 118 182 sind wäßrige Lösungen von drei genau definierten Stilbenfarbstoffen, von denen zwei Disazofarbstoffe sind und deren andere ein Trisazofarbstoff ist, bekannt. Die Lösungen jeder der drei Farbstoffe müssen bedingungsgemäß 5 bis 20% Harnstoff enthalten. Die Lösungen werden unmittelbar anschließend an die Herstellung der Farbstoffe durch Diazotierung und Kupplung mit Lithium-hydroxid auf einen pH-Wert von 8,5 bis 9,5 eingestellt. Alle Angaben dieser Patentschrift sind auf die drei strukturmäßig genau definierten Stilbenfarbstoffe beschränkt und geben keine Hinweise auf andere Farbstoffe oder Farbstoffklassen oder auf Lösungen, die keinen Harnstoff enthalten.

Aus der US—Patentschrift 3 957 425 sind 15 bis 25%ige wäßrig-organische Lösungen eines einzigen Disazofarbstoffs, nämlich des Farbstoffs CI Acid Red 151, bekannt. Wie schon aus der Farbstoffbezeichnung hervorgeht, handelt es sich bei diesem Farbstoff nicht um einen Direktfarbstoff, sondern um einen Säurefarbstoff, der demgemäß auch nicht zum Färben oder Bedrucken von hydroxygruppenhaltigen Materialien, sondern zum Färben von Nylon bestimmt ist. Die Lösungen des Farbstoffs müssen bedingungsgemäß anionische und nichtionische oberflächenaktive Stoffe bestimmter Zusammensetzung, in bestimmter Menge und in einem bestimmten Verhältnis enthalten. Wie aus dem Beispiel hervorgeht, wird beim Verdünnen der 22,8%igen Farbstofflösung mit dem gleichen Volumen Wasser (also auf eine Farbstoffkonzentration von 11,4%) eine dünnflüssige Suspension ("slurry"), also keine Lösung, erhalten. Dieser Literaturstelle sind somit keine Angaben zu entnehmen, wie z.B. eine gießbare 11%ige Lösung des Farbstoffs hergestellt werden kann. Hinweise auf andere Farbstoffe oder andere Farbstoffklassen können dieser Patentschrift nicht entnommen werden.

Es wurde nun überraschenderweise gefunden, daß sich lagerfähige, dünnflüssige wäßrige Tris- und Tetrakisazofarbstoffzubereitungen leicht herstellen lassen, wenn ein alkalistabiler Trisazodirektfarbstoff mit mindestens einer aromatischen Hydroxyl- und/oder Enolgruppe und 2 bis 4 wasserlöslich machenden Gruppen und/oder ein alkalistabiler Tetrakisazodirecktfarbstoff mit mindestens einer aromatischen Hydroxyl- und/oder Enolgruppe und mindestens 2 wasserlöslichmachenden Gruppen oder ein Gemisch derartiger Azodirektfarbstoffe mit Wasser gemischt und der pH-Wert auf gleich oder größer als 12 eingestellt wird.

Die Erfindung betrifft daher eine lagerfähige, dünnflüssige wäßrige Farbstoffzubereitung eines alkalistabilen Trisazodirektfarbstoffs mit mindestens einer aromatischen Hydroxyl- und/oder Enolgruppe und 2 bis 4 wasserlöslich machenden Gruppen und/oder eines alkalistabilen Tetrakisazodirektfarbstoffs mit mindestens einer aromatischen Hydroxyl- und/oder Enolgruppe und mindestens zwei wasserlöslich machenden Gruppen oder eines Gemisches derartiger Azodirektfarbstoffe und ein Verfahren zu ihrer Herstellung und ihre Verwendung zum Färben und Bedrucken. Die erfindungsgemäße Farbstoffzubereitung ist dadurch gekennzeichnet, daß sie einen pH-Wert gleich oder größer als 12 und eine Farbstoffkonzentration von 5 bis 50 Gew.%, vorzugsweise von 10 bis 30 Gew.%, besitzt.

Geeignete alkalistabile Tris- und Tetrakisazodirektfarbstoffe können metallfrei oder metallhaltig sein. Die Tetrakisazofarbstoffe enthalten vorzugsweise 2 bis 5 wasserlöslich machende Gruppen. Wasserlöslich machende Gruppen sind insbesondere Carboxy- und/oder Sulfogruppen, die im allgemeinen in Salzform, insbesondere in Form der Natriumsalze, vorliegen. Bei den aromatischen Hydroxylgruppen handelt es sich vorzugsweise um solche der Phenol- und/oder Naphtholreihe. Die stark alkalischen pH-Werte gleich oder größer als 12 in den erfindungsgemäßen Farbstoffzubereitungen werden mittels tertiärer Alkaliphosphate und/oder Alkalimetasilikate und/oder vorzugsweise Alkalihydroxiden eingestellt. Ein Beispiel für ein geeignetes tertiäres Alkaliphosphat ist das tert. Natriumphosphat $Na_3PO_4 \cdot 12H_2O$ bzw. das entsprechende tert. Kaliumphosphat. Ein Beispiel für ein geeignetes Alkalimetasilikat ist das sogenannte Natriummonosilikat $Na_2SiO_3 \cdot 4H_2O$ bzw. $Na_2SiO_3 \cdot 9H_2O$. Beispiele für geeignete Alkalihydroxide sind Lithium- und/oder Natrium- und/oder Kaliumhydroxid, von denen das Natriumhydroxid bevorzugt ist.

Zur Herstellung der erfindungsgemäßen Farbstoffzubereitung werden Tris- oder Tetrakisazodirektfarbstoff oder ein Gemisch derartiger Azodirektfarbstoffe, Wasser, tertiäres Alkaliphosphat und/oder Alkalimetasilikat und/oder Alkalihydroxid miteinander vermischt, bis der Farbstoff in Lösung gegangen ist. Die Mischung erfolgt bei Temperaturen von Raumtemperatur bis ca. 50°C. Außerdem können auch weitere noch zu nennende Zusatzstoffe (hydrotrope Verbindungen, Tenside, Puffer) zugemischt werden. Ein Pulverfarbstoff wird unter Rühren in Wasser eingetragen, wobei die alkalisch reagierenden, den pH-Wert von über 12 einstellenden Verbindungen oder die anderen Zusatzstoffe vor, während oder nach der Farbstoffzugabe dem Wasser zugefügt werden. Die Mengen von Wasser, Farbstoff und alkalisch reagierender, den pH-Wert von gleich oder größer als 12 einstellender Verbindung werden dabei so gewählt, daß die fertige Farbstoffzubereitung 5 bis 50 Gew.%, vorzugsweise 10 bis 30 Gew.%, Farbstoff enthält und einen pH-Wert von gleich oder größer als 12, insbesondere von 12,5 bis 13,1 besitzt. Bei der Herstellung der erfindungsgemäßen Farbstoffzubereitung kann man auch von Farbstoffpasten oder von Preßkuchen aus der Fabrikation der Farbstoffe ausgehen. Der Wassergehalt dieser Produkte ist entsphrechend zu berücksichtigen. Nach beendeter Auflösung des Farbstoffs wird die Zubereitung gegebenenfalls auf Raumtemperatur abgekühlt und stellt dann eine lagerfähige, dünnflüssige Farbstoffzubereitung dar.

Wie bereits erwähnt, können zusätzlich in den erfindungsgemäßen Farbstoffzubereitungen an sich bekannte hydrotrope Verbindungen oder deren Gemische zugegen sein, beispielsweise aus der Reihe der hydrotropen Salze, wie Natriumbenzoat, benzolsulfonsaures Natrium, p-toluolsulfonsaures Natrium, N-benzylsulfanilsaures Natrium. Beispiele für weitere geeignete hydrotrope Verbindungen sind: amidische carbonylgruppenhaltige Verbindungen, beispielsweise Harnstoff, Formamid, Dimethylformamid, Acetamid, N-Methylpyrrolidon, $\varepsilon$-Caprolactam; ferner mit Wasser mischbare ein- oder mehrwertige Alkohole, beispielsweise Methanol, Äthanol, n-Propanol, Isopropanol, Äthylenglykol, Diäthylenglykol, Triäthylenglykol, Polyäthylenglykol, Polypropylenglykol, Polyvinylalkahol, 1,2-Propylenglykol, 1,3-Propylenglykol, 2,3-Butylenglykol, 1,4-Butylenglykol, 2,2-Diäthyl-propandiol(1,3), 1,6-Hexylenglykol, 3-Methyl- und 2-Methyl-hexylenglykol(1,6), 2-Methyl-pentandiol(2,4), 2-Äthyl-hexandiol(1,3), 2,2-Dimethyl-hexandiol(1,3), Glycerin, Pentaerithrit, Mannit, Sorbit, Dextrin; ferner Äthylenglykolalkyläther, Diäthylenglykolalkyläther, Triäthylenglykolalkyläther, Polyäthylenglykolalkyläther, jeweils insbesondere mit 1 bis 4 C-Atomen im Alkylrest.

Hydrotrope Verbindungen sind beispielsweise beschrieben bei H. Rath + S. Müller, Melliand Textilbereichte *40*, 787 (1959), oder bei E. H. Daruwalla in K. Venkataraman, "The Chemistry of Synthetic Dyes", Vol. VII, Seiten 86 bis 92 (1974) und in der dort zitierten Literatur.

Bevorzugte hydrotrope Verbindungen, die in den erfindungsgemäßen Farbstoffzubereitungen enthalten sind, sind Diäthylenglykol, Triäthylenglykol, Äthylenglykolmonoalkyläther, Diäthylenglykolmonoalkyläther, Triäthylenglykolmonoalkyläther mit jeweils 1—2 C-Atomen im Alkylrest, Harnstoff, $\varepsilon$-Amino-capronat (aus $\varepsilon$-Caprolactam) sowie deren Gemische. Normalerweise enthalten die erfindungsgemäßen Farbstoffzubereitungen 5—40 Gew.%, vorzugsweise 10 bis 35 Gew.% einer oder mehrerer hydrotroper Verbindungen.

In den erfindungsgemäßen Farbstoffzubereitungen kann auch zusätzlich ein an sich bekanntes Tensid oder ein Gemisch derartiger Tenside zugegen sein. Als derartige Tenside kommen Aniontenside und/oder Amphotenside bzw. nichtionogene Tenside in Betracht, wie sie z.B. beschrieben sind in Ullmanns Enzyklopädie der Technischen Chemie, 3. Auflage, Band 16, Seiten 724 bis 748 (1965), J. L. Moillet, B. Collie und W. Black in "Surface Chemistry", 2. Auflage, Kap. 10 bis 15, E. H. Daruwalla in K. Venkataraman: "The Chemistry of Synthetic Dyes", Vol. VII, Seiten 86—92 (1974).

Durch den zusätzlichen Gehalt an einer hydrotropen Verbindung und/oder eines Tensids lassen sich die Lagerstabilität der Farbstoffzubereitung bzw. die Löslichkeit des Farbstoffs weiter verbessern.

Die erfindungsgemäßen Farbstoffzubereitungen können auch im stark alkalischen Bereich puffernde Substanzen, beispielsweise Aminoalkancarbonsäuren wie Aminoessigsäure, $\beta$-Aminopropionsäure, $\gamma$-Aminobuttersäure, $\varepsilon$-Aminocapronsäure enthalten. Ferner können die erfindungsgemäßen Farbstoffzubereitungen Komplexone beispielsweise Nitrilotriessigsäure oder Äthylendiamin-tetraessigsäure enthalten.

Die erfindungsgemäßen Farbstoffzubereitungen sind dünnflüssige, lagerfähige, konzentrierte Farbstofflösungen mit einem pH-Wert von gleich oder größer als 12, die sich hervorragend als Schreibmittel oder zur Herstellung von Farbflotten oder Druckpasten zum Färben und Bedrucken von hydroxylgruppenhaltigen natürlichen oder synthetischen Fasermaterialien, insbesondere von Baumwolle, Regeneratcellulose sowie von Papier, Holz eignen. Die aus ihnen hergestellten Färbeflotten eignen sich insbesondere für vollkontinuierliche Färbeverfahren, beispielsweise das pad-steam-Verfahren, sind jedoch auch zum Färben von hydroxylgruppenhaltigen Fasermaterialien nach dem Ausziehverfahren, nach dem HT-Verfahren und nach halbkontinuierlichen Färbeprozessen, beispielsweise nach dem padjig-, pad-roll- und Kaltverweilverfahren geeignet.

Die erfindungsgemäßen Farbstoffzubereitungen brauchen zum Färben nur noch mit entsprechenden Mengen Wasser verdünnt zu werden, um eine färbefertige Flotte zu erhalten. Für den Druck müssen noch an sich bekannte Druckverdickungen hinzugefügt werden. Die so erhältlichen Färbeflotten und Druckpasten weisen pH-Werte gleich oder größer als 11,5, vorzugsweise von 12 bis 13,1 auf.

Insbesondere bei vollkontinuierlichen Färbeprozessen, z.B. dem pad-steam- und pad-salt-Verfahren bietet der Einsatz der erfindungsgemäßen Farbstoffzubereitungen gegenüber der Verwendung der entsprechenden handelsüblichen Pulverfarbstoffe oder Direktfarbstofflösungen, die keine stark alkalischen pH-Werte von gleich oder größer als 12 aufweisen, den überraschenden technischen Vorteil, daß wesentlich geringere Fixier- und Dämpfzeiten erforderlich sind, um optimale Farbausbeuten zu erzielen. In der Zeiteinheit kann deshalb bei Verwendung von Färbeflotten, die aus den erfindungsgemäßen Farbstoffzubereitungen hergestellt worden sind, bei gleichem Energieaufwand beim kontinuierlichen Färbeprozeß wesentlich mehr Material gefärbt werden als beim Einsatz handelsüblicher

Pulverfarbstoffe oder bei Verwendung von Farbstofflösungen von Direktfarbstoffen, die keine alkalischen pH-Werte gleich oder größer als 11,5 aufweisen.

Ein weiterer überraschender technischer Vorteil besteht darin, daß sich die Löslichkeit von Tris- und Tetrakisazodirektfarbstoffen der genannten Art bei Temperaturen von —10°C bis +50°C durch Einstellen von pH-Werten gleich oder größer als 12 in vielen Fällen um einen Faktor größer als 5 bis 10 verbessern läßt, so daß sich auch schwer lösliche Trisazodirektfarbstoffe und vor allem Tetrakisazodirektfarbstoffe mit hohem Molekulargewicht in konzentrierte wäßrige dünnflüssige Farbstoffpräparate überführen lassen, von denen nach den bisher bekannten Methoden zur Herstellung von flüssigen Direktfarbstoffen keine konzentrierten Lösungen erhalten werden können.

Ein weiterer technischer Vorteil bei der Herstellung der erfindungsgemäßen Farbstoffzubereitungen ist dadurch gegeben, daß man die Farbstoffe in Form wäßriger Preßkuchen einsetzen kann, wie sie bei der Farbstoff-Fabrikation anfallen, und die noch herstellungsbedingte Elektrolyte, beispielsweise in Mengen von 1 bis 20%, wie Natriumchlorid, Ammoniumchlorid, Natriumhydrogencarbonat, Natriumcarbonat, enthalten. Eine Abtrennung derartiger herstellungsbedingter Elektrolyte ist zur Herstellung der erfindungsgemäßen Farbstoffzubereitungen nicht erforderlich.

Die Verwendung elektrolythaltiger Direktfarbstofflösungen bietet sogar den Vorteil einer höheren Substantivität bzw. Farbausbeute im Vergleich zu elektrolytfreien Lösungen von Direktfarbstoffen.

Zur Herstellung der erfindungsgemäßen Farbstoffzubereitungen sind beispielsweise solche Tris- und Tetrakisazodirektfarbstoffe geeignet, die einen oder mehrere Reste folgender hydroxylgruppenhaltiger Farbstoffvorprodukte enthalten: Phenol, 2-Methylphenol, 3-Methylphenol, 4-Methylphenol, 3-Methoxyphenol, 2-Hydroxybenzolsulfonsäure, 3-Hydroxybenzolsulfonsäure, 4-Hydroxybenzolsulfonsäure, 1,3-Dihydroxybenzol, 1,3 - Dihydroxy - 5 - methylbenzol, 1,3 - Dihydroxy - 5 - sulfonsäure, 1 - Amino - 3 - hydroxybenzol, 1 - (2′ - Methylphenylamino) - 3 - hydroxybenzol, 1 - (Phenylamino) - 3 - hydroxybenzol, 3 - Aminophenyl - 4 - sulfonsäure, 3 - Carboxymethylaminophenol, 2-Hydroxybenzoesäure, 2 - Hydroxy - 3 - methylbenzoesäure, 2 - Hydroxy - 4 - methyl-benzoesäure, 2 - Hydroxy - 5 - methylbenzoesäure, 2 - Hydroxy - 5 - sulfobenzoesäure, 2 - Hydroxy - 5 - aminobenzoesäure, 2 - Hydroxy - 3 - aminobenzoesäure, 1 - Hydroxynaphthalin, 1,6 - Dihydroxynaphthalin, 1 - Hydroxynaphthalin - 4 - sulfosäure, 1 - Hydroxynaphthalin - 3,6 - disulfosäure, 1 - Hydroxynaphthalin - 5 -, -6- und -7-sulfosäure, 2 - Hydroxynaphthalin, 2 - Hydroxy - 7 - aminophthalin, 2 - Hydroxynaphthalin - 3 - carbonsäure, 2 - Hydroxynaphthalin - 3 - carbonsäureanilid, 2 - Hydroxynaphthalin - 6 -, -7- und - 8 - sulfonsäure, 2 - Hydroxynaphthalin - 3,6 - disulfonsäure, 2 - Hydroxynaphthalin - 6,8 - disulfonsäure, 1 - Hydroxynaphthalin - 3,6,8 - trisulfonsäure, 1 - Hydroxynaphthalin - 3,8 - disulfonsäure, 1 - Amino - 8 - hydroxynaphthalin - 4 - sulphonsäure, 1 - Amino - 8 - hydroxynaphthalin - 3,6 - disulfosäure, 1 - Amino - 8 - hydroxynaphthalin - 4,6 - disulfosäure, 1 - Amino - 8 - hydroxynaphthalin - 2,4 - disulfosäure, 1 - Acetylamino - 8 - hydroxynaphthalin - 3,6 - disulfosäure, 1 - Hydroxy - 8 - chlornaphthalin - 3,6 - disulfosäure, 1 - Hydroxy - 8 - äthoxynaphthalin - 3,6 - disulfosäure, 1,8 - Dihydroxynaphthalin - 3,6 - disulfosäure, 1,8 - Dihydroxynaphthalin - 4 - sulfonsäure, 1,7 - Dihydroxynaphthalin - 3 - sulfosäure, 2 - Amino - 8 - hydroxynaphthalin - 6 - sulfonsäure, 2 - Amino - 8 - hydroxynaphthalin - 3,6 - disulfonsäure, 2 - Methylamino - 8 - hydroxynaphthalin - 6 - sulfonsäure, 2 - Dimethylamino - 8 - hydroxynaphthalin - 6 - sulfonsäure, 2 - Carboxymethylamino - 8 - hydroxynaphthalin - 6 - sulfonsäure, 2 - Acetylamino - 8 - hydroxynaphthalin - 6 - sulfonsäure, 2 - Benzoylamino - 8 - hydroxynaphthalin - 6 - sulfonsäure, 2 - Phenylamino - 8 - hydroxynaphthalin - 6 - sulfonsäure, 3 - Amino - 8 - hydroxynaphthalin - 6 - sulfonsäure, 3 - Acetylamino - 8 - hydroxynaphthalin - 6 - sulfonsäure, 3 - Carboxymethylamino - 8 - hydroxynaphthalin - 6 - sulfonsäure, 3 - Benzoylamino - 8 - hydroxynaphthalin - 6 - sulfonsäure, 3 - Phenylamino - 8 - hydroxynaphthalin - 6 - sulfonsäure, 6,6′ - Bis - (1 - hydroxy - 3 - sulfonaphthyl) - harnstoff (J-Säure-Harnstoff), 6,6 - Bis - (1 - hydroxy - 3 - sulfonaphthyl) - amin (J-Säure-imid), Acetessiganilid, Acetessig - 2 - methoxyanilid, Acetessig - 4 - methoxyanilid, Acetessig - 3 - sulfoanilid, Acetessig - 4 - sulfoanilid, Acetessig - 4 - carboxyanilid, Acetessig - 2 - methoxy - 4 - sulfoanilid, Acetessig - 2 - methoxy - 5 - methyl - 4 - sulfoanilid, Acetessig - 2,4 - dimethoxy - 5 - sulfoanilid, Acetessig - 2,5 - dimethoxy - 4 - sulfoanilid, Acetessig - naphthylamid(1), Acetessig - naphthylamid(2), Acetessig - 4 - sulfonaphthylamid(1), Acetessig - 6 - sulfonaphthylamid(1), Acetessig - 6 - sulfonaphthylamid(2), 1 - Phenyl - 3 - methyl - pyrazolon(5), 1 - (4′ - Sulfophenyl) - 3 - methylpyrazolon(5), 1 - (2′,5′ - Dichlor - 4′ - sulfophenyl) - 3 - methyl - pyrazolon(5), 1 - Phenyl - pyrazolon(5) - 3 - carbonsäure, 1 - (4′ - Sulfophenyl) - pyrazolon(5) - 3 - carbonsäure, 4 - Methyl - 3 - cyano - 6 - hydroxypyridon(2), 4 - Methyl - 6 - hydroxypyridon(2) - 3 - sulfonsäure, 1,4 - Dimethyl - 3 - cyano - 6 - hydroxypyridon(2), 1,4 - Dimethyl - 6 - hydroxypyridon(2) - 3 - sulfonsäure.

Zur Herstellung der erfindungsgemäßen Farbstoffzubereitungen eignen sich beispielsweise folgende im Colour Index aufgeführten hydroxylgruppenhaltigen und/oder enolgruppenhaltigen, metallfreien oder metallhaltigen Trisazo- und Tetra-kisazofarbstoffe der Direktfarbstoffreihe: C. I. Direct Green 20, Blue, 39, Red 50, Black 241, Black 9, Black 2, Black 21, Black 80, Blue 33, Blue 157, Brown 52, Black 24, Blue 26, Blue 63, Blue 30, Blue 34, Black 48, Green 59, Green 26, Blue 82, Blue 148, Blue 186, Blue 71, Blue 72, Blue 74, Black 49, Black 56, Blue 239, Black 103, Black 74, Blue 78, Blue 70,

Blue 69, Blue 81, Blue 75, Blue 83, Green 33, Orange 94, Black 19, Black 28, Black 22, Black 32, Blue 176, Blue 175, Blue 162, Blue 159, Red 80, Red 194, Red 32, Black 75, Black 38, Brown 95, Green 1, Black 4.

Ferner eignen sich von 2 - (4' - Aminophenyl) - 5 - (bzw. 6) - amino - benzimidazol abgeleitete, hydroxygruppenhaltige Farbstoff, beispielsweise die der folgenden Formeln:

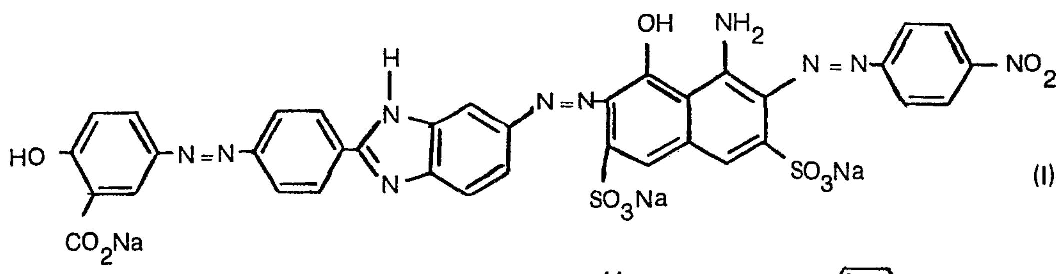

(I)

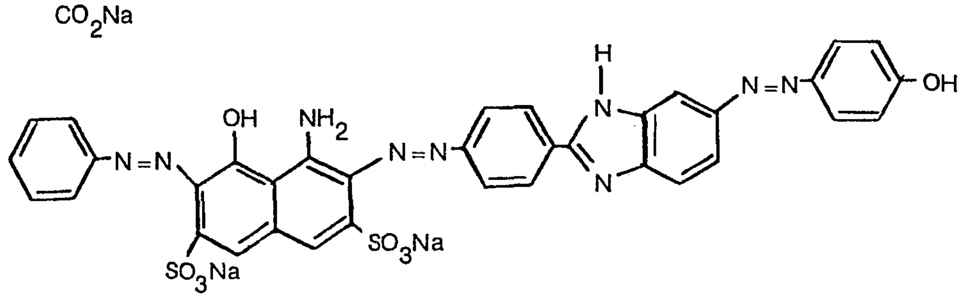

(II)

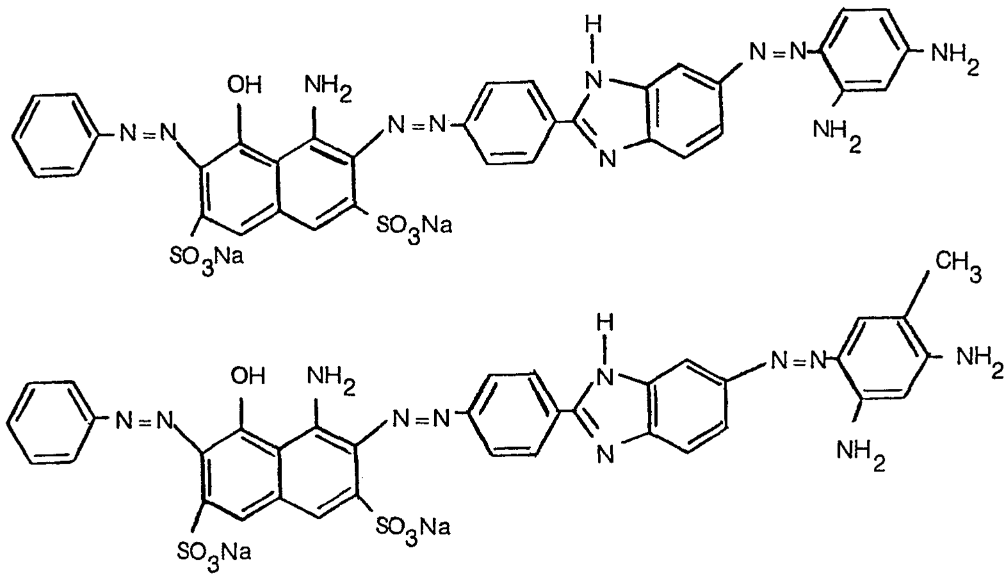

(III)

(IV)

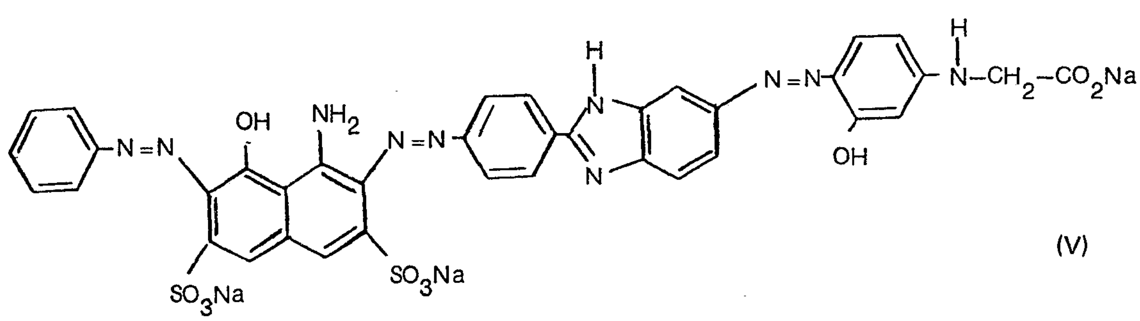

(V)

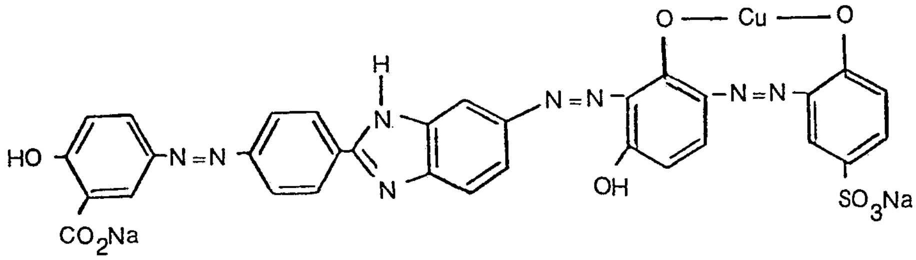

(VI)

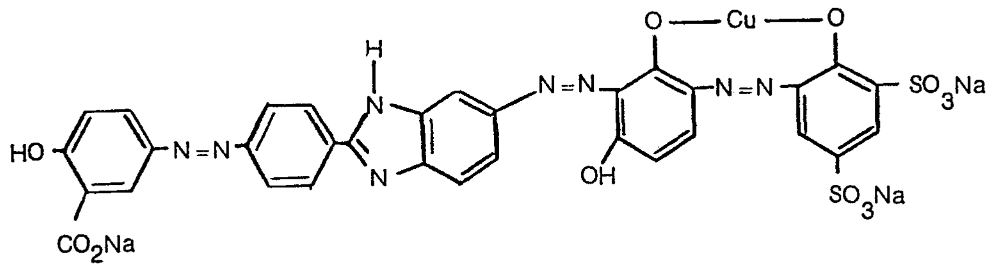

(VII)

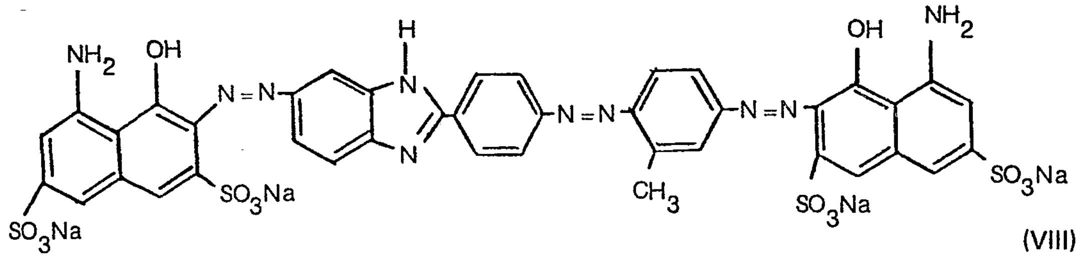

(VIII)

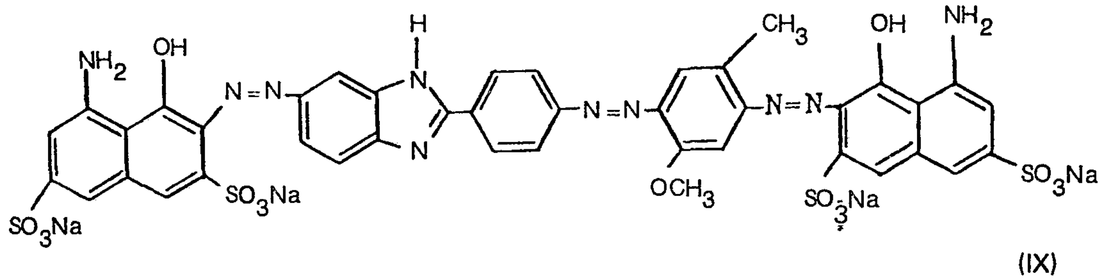

(IX)

sowie von 4,4' - Diaminodiphenylamino - 2 - sulfonsäure abgeleitete, hydroxylgruppenhaltige Azofarbstoffe, beispielsweise der Formel

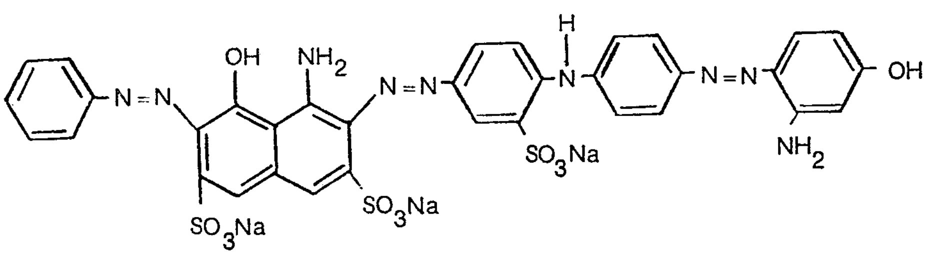

(X)

Bevorzugte Trisazodirektfarbstoffe besitzen mindestens eine, insbesondere eine oder zwei, aromatische und/oder enolische Hydroxylgruppe und 2 bis 4, insbesondere 2 oder 3, wasserlöslich machende Gruppen, Bevorzugte Trisazofarbstoffe sind z.B. die im Colour-Index aufgeführten Trisazofarbstoffe der Direktfarbstoffreihe: C. I. Direct Black 38, Green 1, Black 4, Brown 95, Brown 52, Green 20, ferner die Farbstoffe der Formeln I bis X.

Bevorzugte Tetrakisazodirektfarbstoffe besitzen mindestens eine, insbesondere 1 bis 4, aromatische oder enolische Hydroxylgruppe und mindestens 2, insbesondere 2 bis 5, wasserlöslich machende Gruppen. Bevorzugte Tetrakisazodirektfarbstoffe sind z.B. die im Colour-Index aufgeführten Tetrakisazofarbstoffe der Direktfarbstoffreihe: C. I. Direct Black 19, Black 28, Black 22, Black 32, Blue 175, Blue 176, Red 80, Black 75 sowie der im folgenden Beispiel 1 aufgeführte Farbstoff.

Die Farbstoffe C. I. Direct Black 22, Black 32 und Black 19 sind besonders bevorzugt.

Beispiel 1

5,67 kg eines wässrigen ca. 4 Gew.% Natriumchlorid enthaltenden 27 gew.%igen Preßkuchens des Farbstoffs der Formel XI

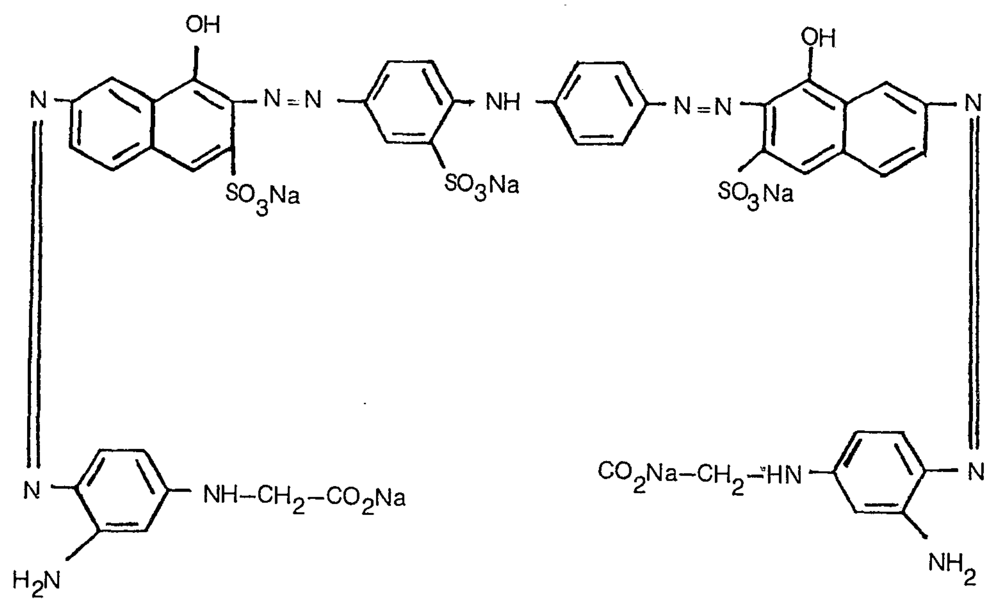

XI

werden unter gutem Rühren in eine Mischung von 12,5 g Humectol C hochkonz. (synthetisches Netzmittel der Cassella AG, Frankfurt/Main-Fechenheim), 600 ml 10n-Natronlauge und 2,5 kg Triäthylenglykol eingetragen und bei 30 bis 40°C gelöst. Anschließend stellt man mit Wasser ein Endgewicht von 10 kg ein und erhält eine niedrigviskose lagerfähige Lösung des Farbstoffs der Formel XI die einen pH-Wert von 13 aufweist und sich hervorragend zum Färben von Baumwolle und Regeneratcellulose nach dem Ausziehverfahren, nach teilkontinuierlichen Färbeverfahren und insbesondere nach kontinuierlichen Färbeprozessen, wie dem pad-steam-Verfahren, eignet.

Das erfindungsgemäße Farbstoffpräparat ist dünnflüssig (die Ausflußzeit im 4 mm DIN-Becher beträgt 12 sec) und lagerstabil. Wiederholt man das Beispiel ohne den Zusatz der Natronlauge, dann wird nur ein nicht gießfähiges, gelartiges Produkt erhalten, in dem der Farbstoff nicht vollständig gelöst ist.

Verfährt man nach den Angaben des Beispiels 1, verwendet jedoch anstelle von 2,5 kg Triäthylenglykol die in Tabelle I angegebenen hydrotropen Verbindungen oder deren Gemische und stellt mit 10n-Natronlauge pH-Werte von 12,5 bis 13 ein, so erhält man ebenfalls Lösungen des Tetrakisazofarbstoffs der Formel XI die eine geringe Viskosität aufweisen und insbesondere für kontinuierliche Färbeprozesse geeignet sind.

TABELLE I

| Beispiel | Hydrotrope Verbindung | pH-Wert der Lösung des Farbstoffs XI |
|---|---|---|
| 2 | 1,25 kg Diäthylenglykol<br>1,25 kg Triäthylenglykol | 13 |
| 3 | 0,5 kg Harnstoff<br>2,0 kg Triäthylenglykol | 12,9 |
| 4 | 1,8 kg ε-Caprolactam | 12,9 |
| 5 | 3 kg Äthylenglykolmonoäthyläther | 12,6 |
| 6 | 3 kg Diäthylenglykolmonoäthyläther | 12,8 |
| 7 | 2,0 kg Triäthylenglykol<br>0,5 kg Polydiol 400 | 12,8 |
| 8 | 2 kg Triäthylenglykol<br>0,5 kg Triäthylenglykolmonoäthyläther | 12,8 |

Beispiel 9

5,7 kg eines wässrigen, elektrolytarmen (NaCl-Gehalt unter 0,1 Gew.%) 27 gew.%igen Preßkuchens des Farbstoffs der Formel

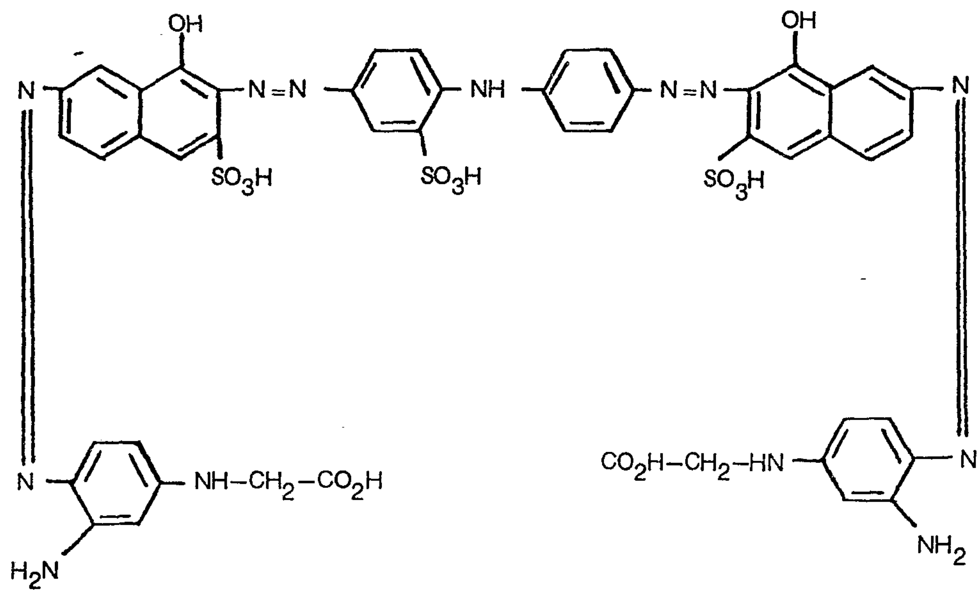

werden in einer Mischung von 3 kg Diäthylenglykol, 12,5 g Humectol C hochkonz. und 900 ml 10n-Natronlauge gelöst. Man erhält eine niedrigviskose lagerfähige Lösung des Farbstoffs mit einem pH-Wert von 13.

Beispiel 10

65,8 g einer 23 gew.%igen wässrigen, ca. 4 Gew.% Natriumchlorid enthaltenden Paste des Farbstoffs CI Direct Black 22 werden in ein gut gerührtes Gemisch von 12 ml 10n-Natronlauge, 0,25 g Humectol C hochkonz. und 40 g Triäthylenglykol eingetragen und bei 30 bis 50°C gelöst. Anschließend gibt man noch 20 g Triäthylenglykol zu und stellt mit wenig Wasser auf ein Endgewicht von 210 g. Man erhält eine Lösung des Farbstoffs, die einen pH-Wert von 13,1 aufweist und sehr gut zum Färben von Baumwolle und Regeneratcellulose nach verschiedenen Färbeprozessen, vor allem nach dem pad-steam- und pad-salt-Verfahren geeignet ist.

Beispiel 11

70,4 g eines ca. 25 gew.%igen wässrigen, natriumchloridhaltigen (ca. 4%) Filterkuchens des Farbstoffs CI Direct Black 32 werden portionweise unter Rühren in eine Mischung von 12 ml 10n-Natronlauge, 0,25 g Humectol C hochkonz. und 40 g Triäthylenglykol eingerührt und bei 30 bis 50°C gelöst. Dann stellt man mit Wasser ein Endgewicht von 200 g ein und erhält eine dünnflüssige Farbstofflösung von pH 12,8, die sich hervorragend zum Färben von Baumwolle und Regeneratcellulose nach verschiedenen Färbeverfahren eignet.

Beispiel 12

1 kg eines wässrigen 27 gew.%igen Preßkuchens des kupferhaltigen Direktfarbstoffs der Formel

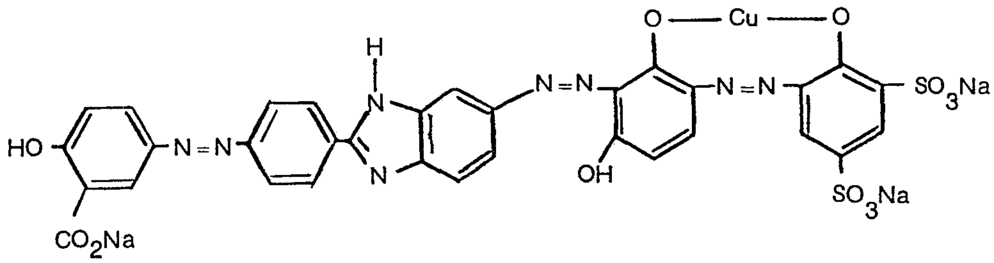

wird in einer Mischung von 600 g Diäthylenglykol und 120 ml 10n-Natronlauge bei ca. 40°C gelöst. Die Lösung des Farbstoffs der Formel weist einen pH-Wert von 12,5 bei geringer Viskosität auf und eignet sich hervorragend zum Färben von Cellulosefasern in lichtechten, braunen Farbtönen nach teil- und vollkontinuierlichen Färbeprozessen.

Beispiel 13

1,1 kg einer wässrigen, 25 gew.%igen Paste des Direktfarbstoffs der Formel

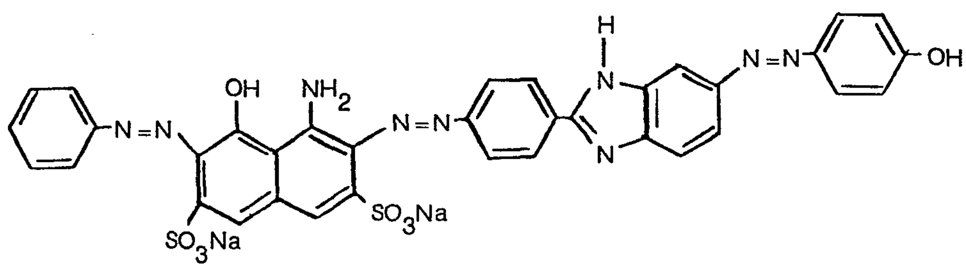

werden unter Rühren in 600 g Triäthylenglykol, 120 ml 10n-Natronlauge und 2,5 g Humectol C hochkonz. bei pH 12,7 gelöst.

Die alkalische Lösung des grünen Trisazofarbstoffs eignet sich sehr gut zum Färben von Cellulosefasern nach verschiedenen Färbeprozessen.

Beispiel 14

Verfährt man nach den Angaben des Beispiels 13, setzt jedoch 1 kg einer 25 gew.%igen, wässrigen Paste eines Gemisches der schwarzen Trisazofarbstoffe der Formeln

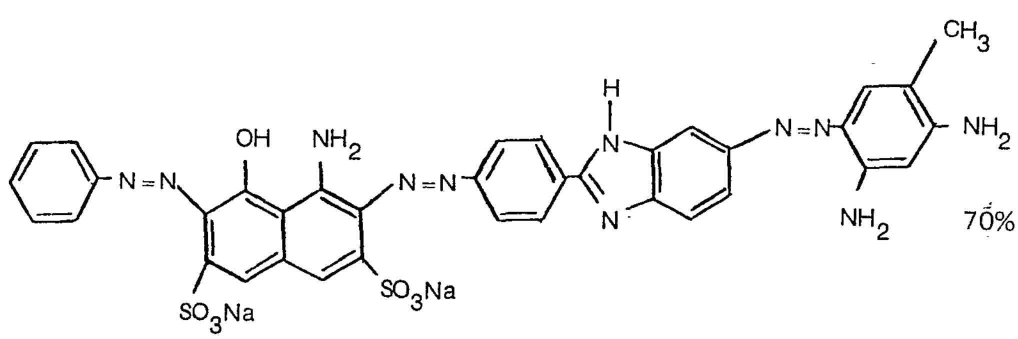

70%

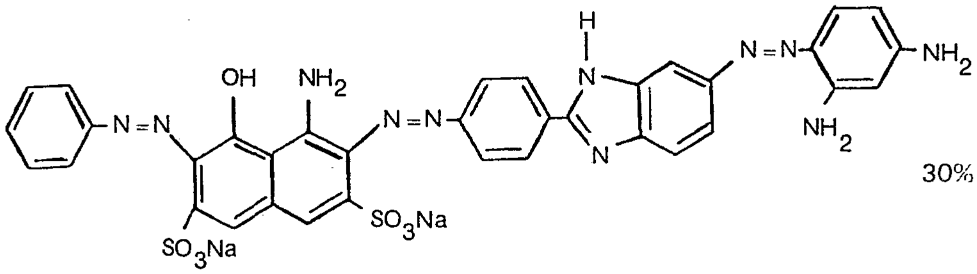

30%

im angegebenen Molverhältnis ein, so erhält man eine Lösung dieses Trisazofarbstoffgemisches, die sich zum Färben von Baumwolle und Regeneratcellulose in tiefschwarzen Farbtönen nach teil- und vollkontinuierlichen Färbeprozessen eignet.

Beispiel 15

30 g einer wässrigen, ca 35 gew.%igen Paste des roten Direktfarbstoffs CI Direct Red 80 werden in einem Gemisch von 30 g Triäthylenglykol und 18 ml 10n-Natronlauge bei pH 12,9 gelöst. Die Farbstofflösung eignet sich sehr gut zum Färben von Cellulosefasern in roten Farbtönen nach teil- und vollkontinuierlichen Färbeprozessen.

Beispiel 16

120 g eines wässrigen, natriumchloridhaltigen 25 gew.%igen Preßkuchens des Farbstoffs CI Direct Black 19 werden in einem Gemisch von 60 g Triäthylenglykol und 12 ml 10n-Natronlauge bei pH 12,6 gelöst. Man erhält eine dünnflüssige Lösung des Farbstoffs, die hervorragend zum Färben von Cellulosefasern, vor allem nach kontinuierlichen Färbeverfahren, geeignet ist.

Beispiel 17

135 g der nach Beispiel 1 hergestellten Farbstoffzubereitung werden mit 865 ml Wasser versetzt. Die so hergestellte Klotzflotte, die einen pH-Wert von 12,5 aufweist, wird in einen Foulardtrog überführt. Anschließend wird eine Baumwollstückware mit der Klotzflotte bei einer Temperatur von 20 bis 25°C foulardiert (Flottenaufnahme 80%). Nach der Foulardpassage wird der auf das Baumwollgewebe aufgebrachte Farbstoff in einer Kontinueanlage durch Einwirkung von Sattdampf bei 103 bis 105°C während einer Minute fixiert.

Verwendet man nach diesem kontinuierlichen Färbeverfahren eine Klotzflotte, bestehend aus einer Lösung von 45 g eines handelsüblichen, 46 gew.%igen Pulverfarbstoffs der Formel XI in 1 l Wasser, so wird mit einer Dämpfzeit von 3 Minuten eine deutlich längere Fixierzeit benötigt, um eine schwarze Färbung gleicher Farbtiefe zu erhalten.

Die Farbstoffzubereitungen der Beispiele 2 bis 16 können in ähnlicher Weise zum Färben benutzt werden, wobei sie zur Herstellung der Färbe- bzw. Klotzflotten entsphrechend verdünnt werden und Färbe- bzw. Klotzflotten mit einem pH-Wert von gleich oder größer als 11,5 liefern.

**Patentansprüche**

1. Wäßrige Farbstoffzubereitung eines alkalistabilen Trisazodirektfarbstoffs mit mindestens einer aromatischen Hydroxyl- und/oder Enolgruppe und 2 bis 4 wasserlöslichmachenden Gruppen und/oder eines alkalistabilen Tetrakisazodirektfarbstoffs mit mindestens einer aromatischen Hydroxyl- und/oder Enolgruppe und mindestens zwei wasserlöslichmachenden Gruppen oder eines Gemisches derartiger Azodirecktfarbstoffe, dadurch gekennzeichnet, daß sie einen pH-Wert von gleich oder größer als 12 und eine Farbstoffkonzentration von 5 bis 50 Gew.% besitzt.

2. Farbstoffzubereitung nach Anspruch 1, dadurch gekennzeichnet, daß der Trisazodirektfarbstoff eine oder zwei aromatische Hydroxyl- und/oder Enolgruppen und/oder der Tetrakisazodirektfarbstoff eine bis vier aromatische Hydroxyl- und/oder Enolgruppen und 2 bis 5 wasserlöslichmachende Gruppen besitzt.

3. Farbstoffzubereitung nach Anspruch 1 und/oder 2, dadurch gekennzeichnet, daß sie eine Farbstoffkonzentration von 10 bis 30 Gew.% besitzt.

4. Farbstoffzubereitung nach einem oder mehreren der Ansprüche 1 bis 3, dadurch gekennzeichnet, daß sie 5 bis 40 Gew.%, vorzugsweise 10 bis 35 Gew.%, einer hydrotropen Verbindung oder eines Gemisches von verschiedenen hydrotropen Verbindungen enthält.

5. Farbstoffzubereitung nach einem oder mehreren der Ansprüche 1 bis 4, dadurch gekennzeichnet, daß sie den Farbstoff

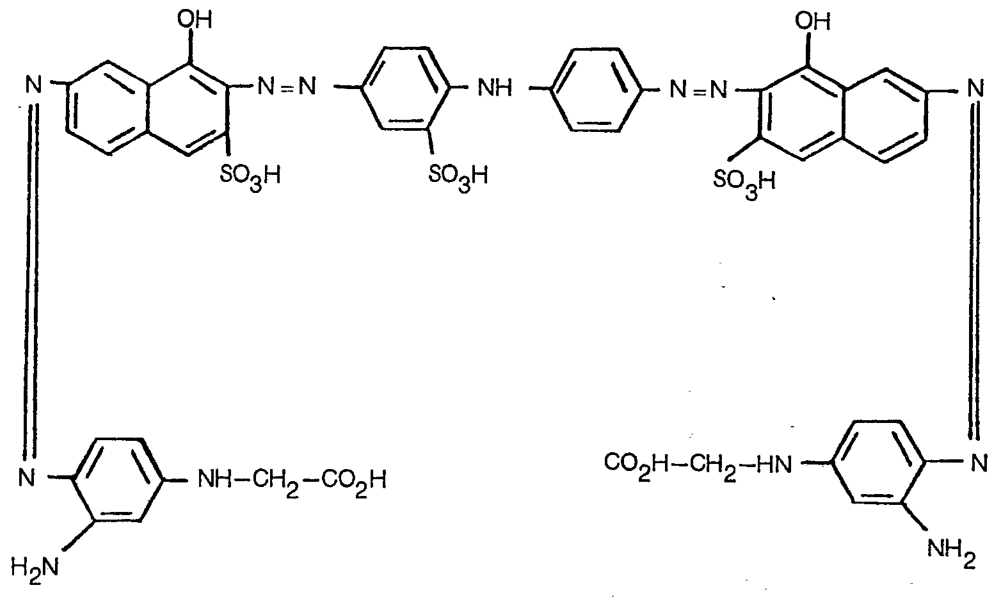

enthält.

6. Farbstoffzubereitung nach einem oder mehreren der Ansprüche 1 bis 5, dadurch gekennzeichnet, daß sie den Farbstoff C. I. Direct Black 22, C. I. Direct Black 32 oder C. I. Direct Black 19 enthält.

7. Farbstoffzubereitung nach einem oder mehreren der Ansprüche 1 bis 6, dadurch gekennzeichnet, daß sie den Farbstoff

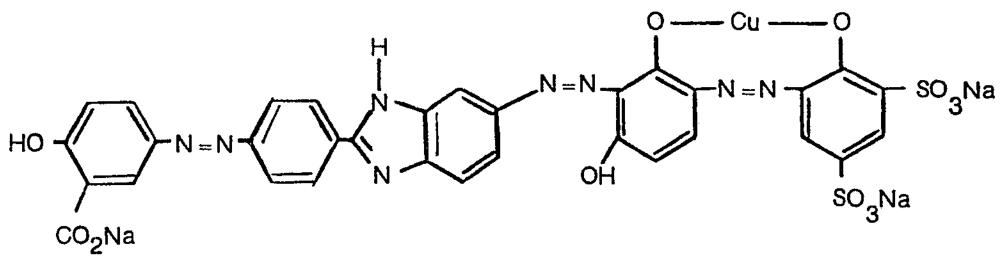

enthält.

8. Farbstoffzubereitung nach einem oder mehreren der Ansprüche 1 bis 7, dadurch gekennzeichnet, daß sie den Farbstoff

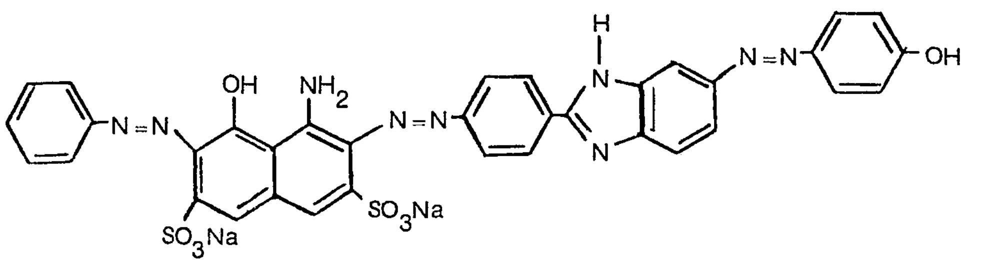

enthält.

9. Farbstoffzubereitung nach einem oder mehreren der Ansprüche 1 bis 8, dadurch gekennzeichnet, daß sie den Farbstoff

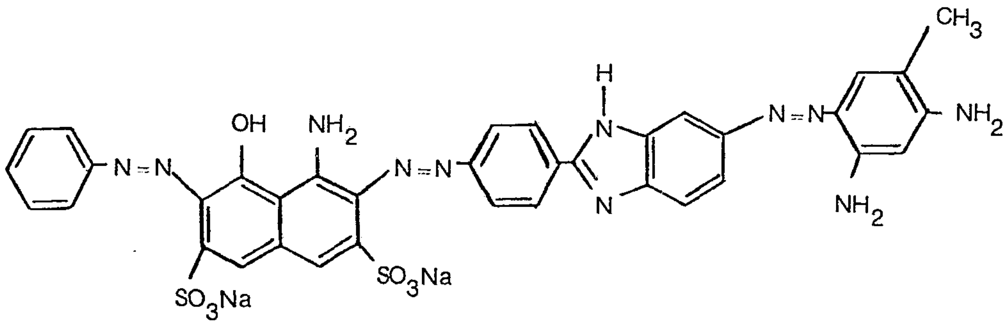

und/oder

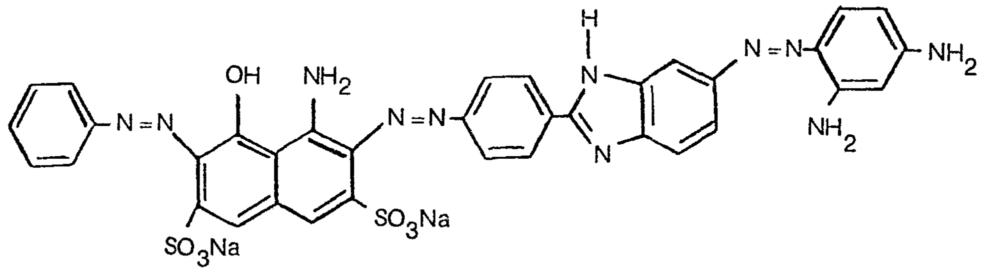

enthält.

10. Farbstoffzubereitung nach einem oder mehreren der Ansprüche 1 bis 6, dadurch gekennzeichnet, daß sie einen Tetrakisazofarbstoff enthält.

11. Verfahren zur Herstellung der Farbstoffzubereitung nach einem oder mehreren der Ansprüche 1 bis 10, dadurch gekennzeichnet, daß ein alkalistabiler Trisazodirektfarbstoff mit mindestens einer, insbesondere 1 oder 2, aromatischen Hydroxyl- und/oder Enolgruppe und 2 bis 4, insbesondere 2 oder 3, wasserlöslichmachenden Gruppen und/oder ein alkalistabiler Tetrakisazodirektfarbstoff mit mindestens einer, insbesondere 1 bis 4, aromatischen Hydroxyl- und/oder Enolgruppe und mindestens 2, insbesondere 2 bis 5, wasserlöslichmachenden Gruppen, Wasser und tertiäres Alkaliphosphat und/oder Alkalimetasilikat und/oder Alkalihydroxid gemischt werden und die Mengenverhältnisse so gewählt werden, daß die Farbstoffzubereitung 5 bis 50 Gew-%, vorzugsweise 10 bis 30 Gew.%, Farbstoff enthält und einen pH-Wert von gleich oder größer als 12 besitzt und daß gegebenenfalls eine hydrotrope Verbindung in solchen Mengen zugemischt wird, daß die Farbstoffzubereitung 5 bis 40 Gew.%, vorzugsweise 10 bis 35 Gew.% davon, enthält.

12. Verwendung der Farbstoffzubereitung nach einem oder mehreren der Ansprüche 1 bis 10 zum Färben und Bedrucken von hydroxylgruppenhaltigen natürlichen oder synthetischen Materialien, insbesondere nach dem pad-steam Verfahren.

**Revendications**

1. Préparation aqueuse d'un colorant direct tris azoique, stable en milieu alcalin, comportant au moins un groupe hydroxyle aromatique et/ou énol et deux à quatre groupes de solubilisation dans l'eau et/ou d'un colorant tétrakis-azoique direct stable en milieu alcalin comportant au moins un groupe hydroxyle aromatique et/ou énol et au moins deux groupes de solubilisation dans l'eau, ou d'un mélange de tels colorants directs azoiques, préparation caractérisée en ce qu'elle présent un pH égal ou supérieur à 12 et und concentration de 5 à 50% en poids du ou des colorants.

2. Préparation de colorant selon la revendication 1, caractérisée en ce que le colorant tris-azoïque direct contient un ou deux groupes hydroxyles aromatiques et/ou énols et/ou le colorant tétrakis-azoïque direct comporte un à quatre groupes hydroxyles aromatiques et/ou énols et deux à cinq groupes de solubilisation dans l'eau.

3. Préparation de colorant selon l'une des revendications 1 et 2, caractérisée en ce qu'elle présente une concentration en colorant de 10 à 30% en poids.

4. Préparation de colorant selon l'une quelconque des revendications 1 à 3, caractérisée en ce qu'elle contient 5 à 40% en poids, de préférence 10 à 35% en poids, d'un composé hydrotrope ou d'un mélange de divers composés hydrotropes.

5. Préparation de colorant selon l'une quelconque des revendications 1 à 4, caractérisée en ce qu'elle contient le colorant:

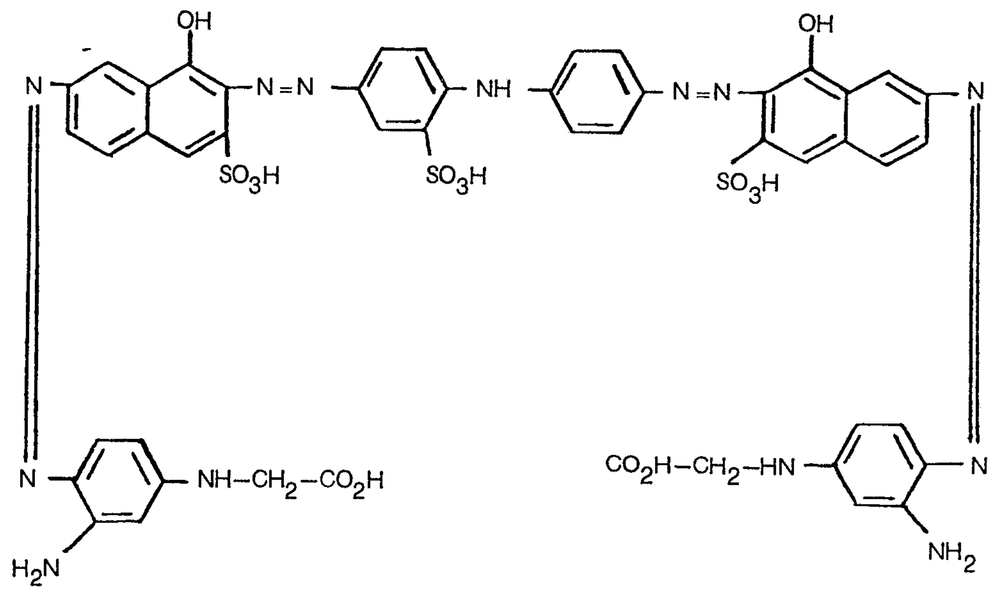

6. Préparation de colorant selon l'une quelconque des revendications 1 à 5, caractérisée en ce qu'elle contient le colorant C.I. Direct Black 22, C.I. Direct Black 32 ou C.I. Direct Black 19.

7. Préparation de colorant selon l'une quelconque des revendications 1 à 6, caractérisée en ce qu'elle contient le colorant:

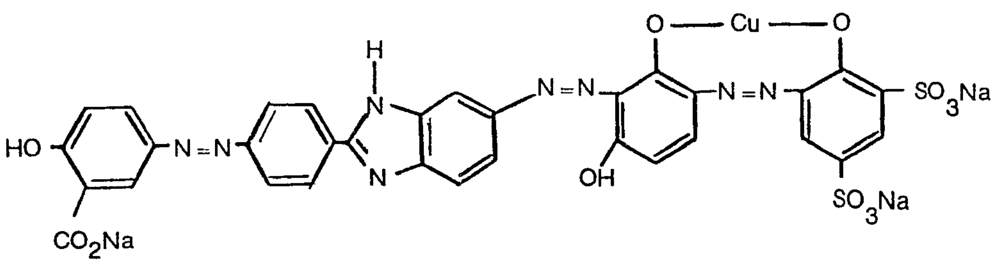

8. Préparation de colorant selon l'une quelconque des revendications 1 à 7, caractérisée en ce qu'elle contient le colorant:

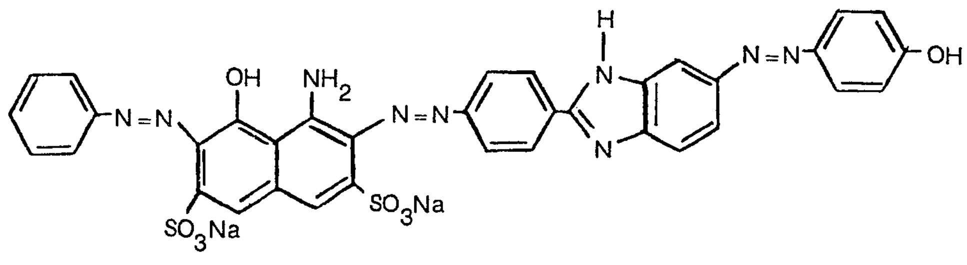

9. Préparation de colorant selon l'une quelconque des revendications 1 à 8, caractérisée en ce qu'elle contient le colorant:

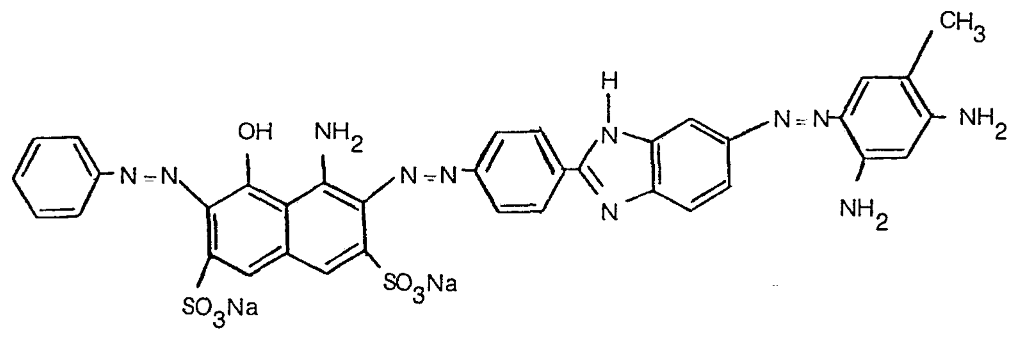

et/ou

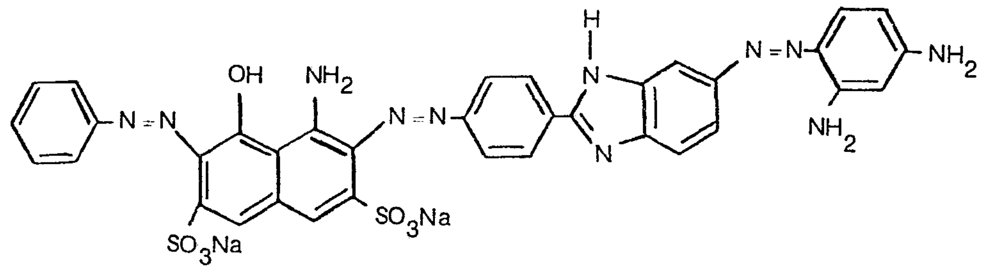

10. Préparation de colorant selon l'une quelconque des revendications 1 à 6, caractérisée en ce qu'elle contient un colorant tétrakis-azoïque.

11. Procédé de production d'une préparation de colorant selon l'une quelconque des revendications 1 à 10 caractérisé en ce qu'on mélange un colorant direct tris-azoique, stable en milieu alcalin, comportant au moins un, en particulier un ou deux, groupes hydroxyles aromatiques et/ou énols et deux à quatre, en particulier deux ou trois, groupes de solubilisation dans l'eau et/ou un colorant tétrakis-azoique étant stable en milieu alcalin et comportant au moins un, en particulier un à quatre, groupes hydroxyles aromatiques et/ou énoliques et au moins deux, en particulier deux à cinq, groupes de solubilisation dans l'eau, de l'eau, et du phosphate alcalin tertiaire et/ou du métasilicate alcalin et/ou de l'hydroxyde alcalin et l'on choisit les proportions pondérales de façon que la préparation de colorant contienne 5 à 50% en poids, de préférence 10 à 30% en poids de colorant, et possède un pH égal ou supérieur à 12, et en ce qu'on incorpore également un composé hydrotrope en des quantités telles que la préparation de colorant en contienne 5 à 40% en poids, avantageusement 10 à 35% en poids.

12. Application de la préparation de colorant selon l'une quelconque des revendications 1 à 10 à la teinture et à l'impression, en particulier selon le procédé "pad-steam" (foulardage/vaporisage), de matières naturelles ou synthétiques contenant des groupes hydroxyles.

**Claims**

1. Aqueous dyestuff formulation of a trisazo direct dyestuff which is stable to alkali and contains at least one aromatic hydroxyl group and/or enol group and 2 to 4 groups conferring solubility in water, and/or tetrakisazo direct dyestuff which is stable to alkali and contains at least one aromatic hydroxyl group and/or enol group and at least 2 groups conferring solubility in water, or a mixture of such azo direct dyestuffs, characterised in that it has a pH value equal to or greater than 12 and a dyestuff concentration of 5 to 50% by weight.

2. Dyestuff formulation according to Claim 1, characterised in that the trisazo direct dyestuff contains 1 or 2 aromatic hydroxyl groups and/or enol groups and/or the tetrakisazo direct dyestuff contains 1 to 4 aromatic hydroxyl groups and/or enol groups and 2 to 5 groups conferring solubility in water.

3. Dyestuff formulation according to Claim 1 and/or 2, characterised in that it has a dyestuff concentration of 10 to 30% by weight.

4. Dyestuff formulation according to one or several of Claims 1 to 3, characterised in that it contains 5 to 40% by weight, preferably 10 to 35% by weight of a hydrotropic compound or of a mixture of different hydrotropic compounds.

5. Dyestuff formulation according to one or several of Claims 1 to 4, characterised in that it contains the dyestuff

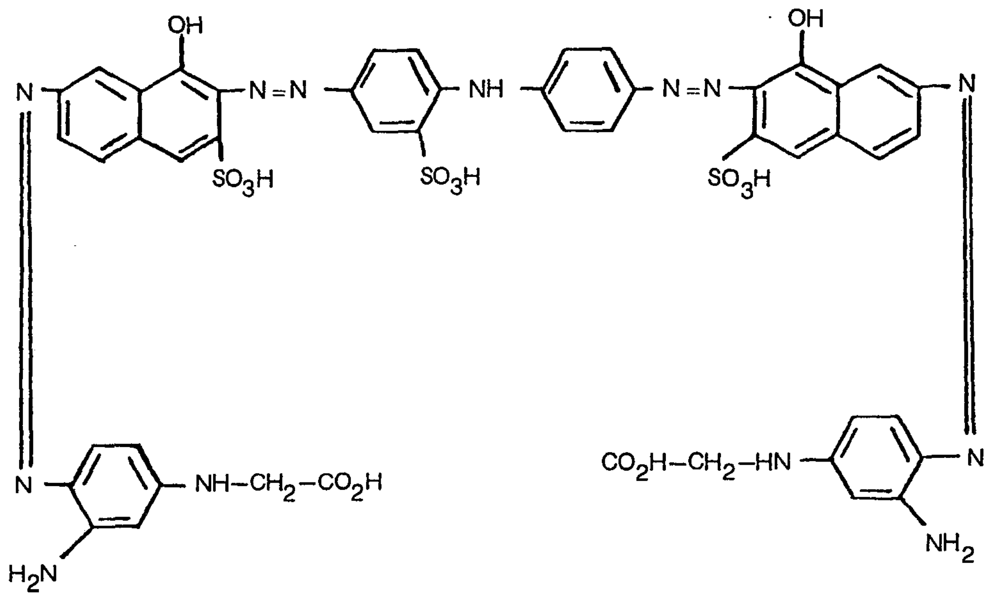

6. Dyestuff formulation according to one or several of Claims 1 to 5, characterised in that it contains the dyestuff C.I. Direct Black 22, C.I. Direct Black 32 of C.I. Direct Black 19.

7. Dyestuff formulation according to one or several of Claims 1 to 6, characterised in that it contains the dyestuff

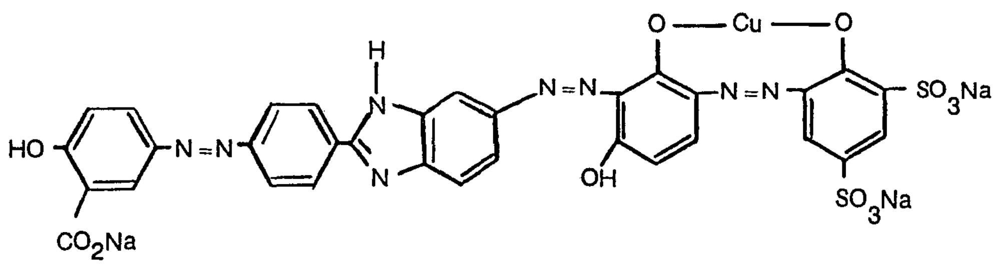

8. Dyestuff formulation according to one or several of Claims 1 to 7, characterised in that it contains the dyestuff

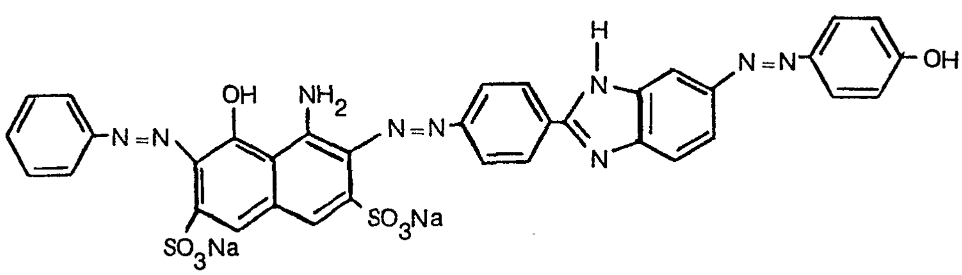

9. Dyestuff formulation according to one or several of Claims 1 to 8, characterised in that it contains the dyestuff

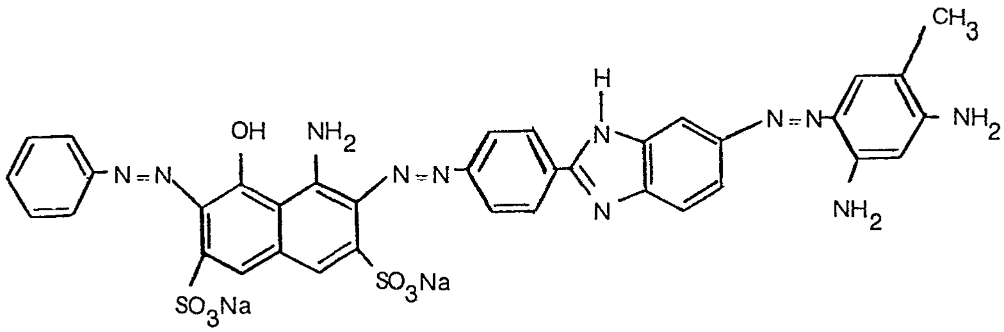

and/or

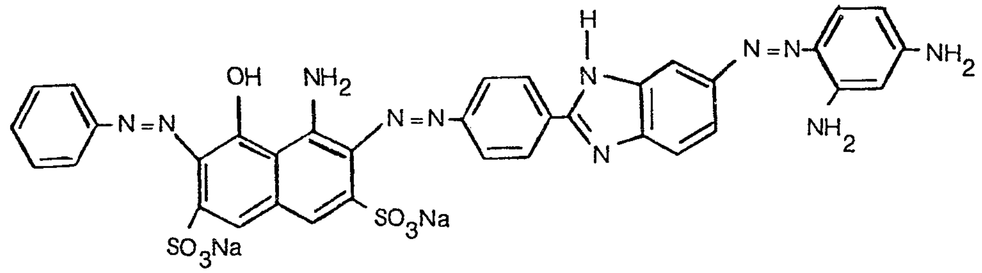

10. Dyestuff formulation according to one or several of Claims 1 to 6, characterised in that it contains a tetrakisazo dyestuff.

11. Process for the preparation of one or several of Claims 1 to 10, characterised in that a trisazo direct dyestuff which is stable to alkali and contains at least 1, in particular 1 or 2, aromatic hydroxyl group and/or enol group, and 2 to 4, in particular 2 or 3, groups conferring solubility in water and/or a tetrakisazo direct dyestuff which is stable to alkali and contains at least 1, in particular 1 to 4, aromatic hydroxyl group and/or enol group and at least 2, in particular 2 to 5, groups conferring solubility in water, are mixed with water, water, and tertiary alkali metal phosphate and/or alkali metal metasilicate and/or alkali metal hydroxide and the proportions are chosen such that the dyestuff formulation contains 5 to 50% by weight, preferably 10 to 30% by weight, of dyestuff and has a pH value equal to or greater than 12 and that, optionally, a hydrotropic compound is admixed in proportions such that the dyestuff formulation contains 5 to 40% by weight, preferably 10 to 35% by weight.

12. Use of the dyestuff formulation according to one or several of Claims 1 to 10 for dyeing and printing natural or synthetic materials containing hydroxyl groups, in particular according to the pad-steam process.